Europäisches Patentamt

(19) European Patent Office    (11) Publication number: **0 026 496**

Office européen des brevets    **B1**

(12) **EUROPEAN PATENT SPECIFICATION**

(45) Date of publication of patent specification: **15.08.84**    (51) Int. Cl.³: **G 11 B 5/72**

(21) Application number: **80105944.5**

(22) Date of filing: **01.10.80**

54 **Magnetic recording disc and method for forming a protective overcoating thereon.**

(30) Priority: **01.10.79 US 80481**

(43) Date of publication of application:
**08.04.81 Bulletin 81/14**

(45) Publication of the grant of the patent:
**15.08.84 Bulletin 84/33**

(84) Designated Contracting States:
**DE FR GB**

(56) References cited:
**DE - B - 1 054 247**
**US - A - 3 973 920**

**PATENTS ABSTRACTS OF JAPAN. vol. 2, no.
75, 14th June 1978, page 2962 E 78**
**PATENTS ABSTRACTS OF JAPAN, vol. 3, no.
15, 9th February 1979, page 124 E 89**

(73) Proprietor: **Datapoint Corporation**
**9725 Datapoint Drive**
**San Antonio Texas 78284 (US)**

(72) Inventor: **Nelson, Carl W.**
**28 East River Drive, Pasatiempo**
**Santa Cruz, California, 95060 (US)**

(74) Representative: **Glawe, Richard, Dr. et al,**
**Patentanwälte Dr. Richard Glawe Dr. Walter Moll,**
**Dipl.-Ing. Klaus Delfs Dr. Ulrich Mengdehl Dr.**
**Heinrich Niebuhr Postfach 260 162**
**D-8000 München 26 (DE)**

Courier Press, Leamington Spa, England.

## Description

Field of the Invention

The present invention generally relates to the field of magnetic recording discs for storing digital information, and more particularly, to protective overcoatings for such recording discs. In even greater particularly the present invention relates to protective overcoatings for magnetic alloy thin-film recording discs.

Background of the Invention

Thin-film, magnetic recording discs are widely used in the computer industry as a means for storing large amounts of digital data. Data are written onto and read off of a rapidly rotating recording disc by means of a magnetic head transducer assembly that flies closely over the disc. The most commonly used recording discs are of the type that include a magnetic oxide dispersion layer formed on a substrate or coated substrate. As an example, an iron oxide recording disc includes a dispersion of ferrimagnetic iron (III) oxide ($\gamma$-$Fe_2O_3$) micro-powders in an epoxy resin binder. As is well known in the art, $\gamma$-$Fe_2O_3$ dispersions exhibit an acicular quality that imposes a limit upon the maximum digitial storage density for iron oxide recording discs.

In order to provide magnetic recording discs with higher digital storage densities, magnetic alloy thin-film recording discs, which include a magnetic alloy formed on a substrate or coated substrate, have been developed. The magnetic medium is formed from ferrimagnetic alloys of high coercivity, such as magnetic cobalt alloys. As an example, one commercially available, magnetic alloy thin-film recording disc has a magnetic medium comprised of a micro-crystalline, ferrimagnetic cobalt-nickel alloy. A thin film of the cobalt-nickel is formed on a coated disc substrate comprised of an aluminum or aluminum alloy substrate coated with a non-ferrimagnetic nickel alloy.

Since the linear, digital recording density for any magnetic recording disc depends not only on the nature and thickness of the magnetic recording medium and the characteristics of the magnetic head, but also on the head-to-medium spacing, higher digital recording densities can be achieved by flying a magnetic head very closely (on the order of submicrons) over the surface of a recording disc. However, the extremely close operational spacing between a rotating recording disc and a magnetic head, as well as the start-stop operations of the magnetic recording system, result in an amount of head-disc dynamic contact that imposes severe wear-resisting requirements on the recording disc. The surface of the recording disc must exhibit a substantial degree of lubricity to insure a low coefficient of friction between the magnetic head and the surface of the recording disc, and thereby prevent the excessive wearing of the disc surface.

For recording discs of iron (III) oxide, chromium (IV) oxide, and magnetic oxides, the necessary lubricating properties are typically provided by a lubricating polymer coating that binds to the epoxy of the magnetic oxide dispersion. However, in the case of a magnetic alloy thin-film recording disc, such as that noted above, no lubricating polymer has been found that adequately binds to the thin-film magnetic medium.

In order to provide the necessary lubricating boundary layer between the disc surface and the magnetic recording head, one approach has been to form a protective overlayer of rhodium over the magnetic medium. During the operation of the magnetic recording system, the rhodium layer reacts with organic vapors present in the environment to form amorphous organic deposits on the surface of the rhodium which undergo frictional polymerization and temporarily form mixed polymer films having good lubrication properties. However, during continued frictional activation, these polymers are further polymerized and lose the good lubricating properties.

From JP—A—53 40505 reported in Patents Abstracts of Japan, Vol. 2, No. 75, 14th June 1978, p. 2962 E 78, there has been known a magnetic recording medium having a thin-magnetic material layer on a non-magnetic material base and a thin-protecting layer of a material of high lubricity, e.g. Pb, Ti, Carbon, etc., applied for example by sputtering onto the thin-magnetic layer. This improves the lubrication with the magnetic head and increases the abrasion resistance of the head and the magnetic medium. Also from JP—A—53 143 206 reported in Patents Abstracts of Japan, Vol. 3, No. 15, 9th February 1979, p. 124 E 89, it has been known to apply, by a sputtering technique, a protecting film of carbon on the surface of a magnetic disc.

A protective layer of carbon, such as known from the aforementioned prior art, can provide good lubricating properties and wear-resistance without having the disadvantage of forming unstable frictional polymers. However, the problem arises of sufficiently bonding such carbon layer to the magnetic layer in order to obtain the desired lubricity and wear-resistance over a prolonged life time of the magnetic recording disc.

Accordingly it is an object of the invention to provide a magnetic recording disc having a protective overcoating and a method for forming said overcoating, which exhibits a high degree of lubricity and is effectively adhered to the underlying magnetic medium.

Summary of the Invention

To achieve these objects, the invention provides a magnetic recording disc comprising a disc-shaped base, a ferrimagnetic alloy thin-film layer and a protective overcoating formed by a layer of carbon, which is characterized by an interfacial layer of titanium provided between, and forming a bond with, said ferrimagnetic alloy thin-film layer and said protective layer of carbon.

Also, the invention provides a method for forming a protective overcoating on a magnetic recording disc of the type having a disc-shaped base over which is formed a ferrimagnetic alloy thin-film layer to form a magnetic recording madium, comprising the step of applying, by sputtering, a protective layer of carbon, and being characterized by the further step of applying, by sputtering, a layer of titanium onto said ferrimagnetic alloy thin-film layer before applying said protective layer of carbon.

The main advantage of the invention is that it provides a durable and wear-resistant surface for the recording disc. The sputtered carbon surface layer is effectively adhered to the disc (i.e., to the cobalt-nickel magnetic medium of the disc) by means of the interfacial layer of titanium. The sputtered carbon surface layer exhibits a high degree of lubricity; the lubricity of the carbon together with is resistance to the formation of frictional polymers, makes a magnetic alloy thin-film recording disc provided with the protective overcoating of the present invention significantly more durable, wear-resistant, and reliable than such recording discs protected by other techniques.

Description of the Preferred Embodiment

In accordance with a preferred embodiment of the present invention, a protective overcoating for a magnetic alloy thin-film recording disc is hereinafter described in relation to a recording disc that includes a coated substrate comprising an aluminum or aluminum alloy substrate with a non-magnetic nickel alloy coating, and a magnetic medium composed of a cobalt-nickel film that is formed over the nickel-coated aluminum substrate. However, those of ordinary skill in the art will recognize that the principals of the present invention are applicable to any magnetic alloy thin-film recording disc that includes any suitable substrate (or coated substrate) over which is formed a magnetic alloy film. Also, any indications of substrate or coating thicknesses are meant to be illustrative only.

In order to form the magnetic recording disc, the aluminum or aluminum alloy substrate is machined and ground and then coated on both sides with an amorphous (or extremely micro-crystalline) non-ferrimagnetic nickel-phosphorus alloy formed by electroless deposition from an aqueous solution. Typically, the thickness of the substrate is 0.5 to 0.6 cm, while that of the electroless nickel coating is approximately 0.005 to 0.01 cm. The surfaces of the nickel-coated aluminum substrate are lapped and chemically cleaned, and then coated on both sides with a layer of a micro-crystalline ferrimagnetic cobalt-nickel-phosphorus alloy formed by electrolytic deposition from an aqueous solution. The thickness of the cobalt-nickel typically is less than one $\mu$m (usually 0.1 to 0.5 $\mu$m.

The protective overcoating for the recording disc includes a layer of sputtered carbon and an interfacial layer of titanium. The titanium interfacial layer is first formed on the magnetic medium of the recording disc, with the carbon surface layer being formed on the surface of the titanium by sputter deposition.

The thickness of the titanium interfacial layer is not critical. By way of illustration, a thickness of 0.05 to 0.125 $\mu$m has been found to provide effective adherence of the sputtered carbon layer to the underlying magnetic medium. To a point, the thickness of. the sputtered carbon layer is also non-critical. However, if the thickness of the carbon is reduced significantly below 0.1 $\mu$m, the lubricating properties of the carbon are reduced resulting in a higher coefficient of friction and increased wearing.

The interfacial layer of titanium acts to facilitate the adherence of the sputtered carbon to the cobalt-nickel magnetic layer. Titanium was chosen for a preferred embodiment because it is a reactive metal that bonds effectively to both cobalt-nickel and carbon. The titanium forms a diffusion interface with the cobalt-nickel magnetic medium, with the sputtered carbon layer bonding to the titanium and, thereby, becoming adhered to the underlying cobalt-nickel magnetic medium.

For a preferred embodiment, the protective overcoating for a magnetic alloy thin-film recording disc is formed as follows. The titanium interfacial layer is formed on the cobalt-nickel magnetic medium (after a suitable cleaning process) by the sputter deposition of titanium from a titanium target in a low-pressure argon gas discharge. Maximum adhesion of the sputtered titanium interfacial layer to the magnetic medium is obtained by first sputter cleaning (also known as sputter etching) the surface of the cobalt-nickel prior to the sputter deposition of the titanium.

Once the titanium interfacial layer is sputtered onto the surface of the recording disc (i.e., onto the cobalt-nickel magnetic medium), the carbon surface layer of the protective overcoating is then deposited by sputter deposition from a carbon target in a low-pressure argon gas discharge. The sputtered carbon bonds to the sputtered interfacial layer of titanium and is thereby effectively adhered to the underlying magnetic medium of the recording disc.

The sputter deposition of the carbon-titanium protective overcoating can be accomplished by either DC or RF (radio-frequency) sputtering. Care must be taken to eliminate all residual active gases from the sputtering system. That is because active gases in a glow discharge provide a very reactive chemical medium for both titanium and carbon, with the titanium readily forming deposits of oxide, nitrides, and hydrides, and with the carbon forming CO, $CO_2$, $CH_4$, and $C_2N_2$ gases. If the titanium layer is allowed to become reacted (i.e., an active gas or gases are chemically adsorbed to form a stable compound or a combination of compounds), an effective diffusion barrier is formed at the surface of the titanium, thereby preventing the formation of a diffusion interface with the sputtered carbon. This, of course, adversely affects the adhesion of the carbon layer to the titanium interfacial layer, and thereby to the surface of the recording disc.

Accordingly, while the sputter deposition of the titanium and the carbon is not conducted at an ultra high vacuum, but rather in the pressure range of 0.3 to 3 Pa nevertheless it is important that the vacuum environment in which the sputtering of the titanium and particularly the carbon takes place be kept extremely clean. The background gas in the sputtering system should consist substantially entirely of an inert gas such as argon, and should not contain any residual air, water vapor, hydrocarbons, or other contaminates.

While the invention has therefore been described with respect to a preferred embodiment, it is to be clearly understood by those of ordinary skill in the art that the invention is not limited thereto, but rather that the limits of the invention are to be interpreted only in conjunction with the appended claims.

## Claims

1. A magnetic recording disc comprising a disc-shaped base, a ferrimagnetic alloy thin-film layer and a protective overcoating formed by a layer of carbon, characterized by an interfacial layer of titanium provided between, and forming a bond with, said ferrimagnetic alloy thin-film layer and said protective layer of carbon.

2. A magnetic recording disc as claimed in claim 1, characterized in that said interfacial layer of titanium is a layer formed by sputter deposition.

3. A method for forming a protective overcoating on a magnetic recording disc of the type having a disc-shaped base over which is formed a ferrimagnetic alloy thin-film layer to form a magnetic recording medium, comprising the step of applying, by sputtering, a protective layer of carbon, characterized by the further step of applying, by sputtering, a layer of titanium onto said ferrimagnetic alloy thin-film layer before applying said protective layer of carbon.

## Revendications

1. Disque d'enregistrement magnétique comprenant une base en forme de disque, une fine couche pelliculaire d'alliage ferrimagnétique et une surcouche protectrice constituée par une couche de carbone, caractérisé par une couche interfaciale de titane prévue entre, et formant une liaison entre, ladite couche pelliculaire d'alliage ferrimagnétique et ladite couche protectrice de carbone.

2. Disque d'enregistrement magnétique selon la revendication 1, caractérisé en ce que ladite couche interfaciale de titane est une couche formée par dépôt par pulvérisation cathodique.

3. Procédé de formation d'une sur couche protectrice sur un disque d'enregistrement magnétique du type ayant une base en forme de disque sur laquelle est formée une fine couche pelliculaire d'alliage ferrimagnétique pour former un milieu d'enregistrement magnétique, comprenant l'operation d'application, par pulvérisation cathodique, d'une couche protectrice de carbone, caractérisé par l'opération supplémentaire d'application, par pulvérisation cathodique, d'une couche de titane sur ladite couche protectrice d'alliage ferrimagnétique avant application de ladite couche protectrice de carbone.

## Patentansprüche

1. Magnetische Aufzeichnungsscheibe mit einem scheibenförmigen Rundkörper, einer Dünnfilmschicht aus ferrimagnetischer Legierung und einem Schutzüberzug, der von einer Kohlenstoffschicht gebildet ist, gekennzeichnet durch eine Grenzflächenschicht aus Titan, die zwischen der Dünnfilmschicht aus ferrimagnetische Legierung und der Schutzschicht aus Kohlenstoff, und mit beiden einen Verbund bildend, angeordnet ist.

2. Magnetische Aufzeichnungsscheibe nach Anspruch 1, dadurch gekennzeichnet, daß die Grenzflächenschicht aus Titan eine durch Zerstäubungs-Abscheidung (Sputtering) aufgebrachte Schicht ist.

3. Verfahren zum Bilden eines Schutzüberzugs auf einer magnetischen Aufzeichnungsscheibe mit einem scheibenförmigen Grundkörper, auf welchem eine Dünnfilmschicht aus ferromagnetischer Legierung zur Bildung des magnetischen Aufzeichnungsmediums aufgebracht ist, wobei als Verfahrensschritt das Aufbringen mittels Zerstäubung einer Schutzschicht aus Kohlenstoff vorgesehen ist, gekennzeichnet durch den weiteren Verfahrensschritt des Aufbringens, durch Zerstäubung, einer Schicht von Titan auf die Dünnfilmschicht aus ferrimagnetischer Legierung vor dem Aufbringen der Schutzschicht aus Kohlenstoff.